# EUROPÄISCHE PATENTSCHRIFT

(11) **EP 3 973 015 B1**
(45) Veröffentlichungstag und Bekanntmachung des Hinweises auf die Patenterteilung: **10.04.2024**
(21) Anmeldenummer: 21730486.4
(22) Anmeldetag: 25.05.2021
(51) Int. Cl.: C08J 11/16

(54) **VERFAHREN ZUR HERSTELLUNG EINES GEMISCHES AUS RECYCELTER TEREPHTHAL- UND ISOPHTHALSÄURE**
PROCESS FOR PREPARING A MIXTURE OF RECYCLED TEREPHTHALIC ACID AND ISOPHTHALIC ACID
PROCÉDÉ DE PRÉPARATION D'UN MÉLANGE D'ACIDE TÉRÉPHTALIQUE ET D'ACIDE ISOPHTALIQUE RECYCLÉS

(30) Priorität: 11.09.2020 DE 102020123772
(43) Veröffentlichungstag der Anmeldung: 30.03.2022
(73) Patentinhaber: RITTEC Umwelttechnik GmbH, 21339 Lüneburg (DE)
(72) Erfinder: BIERMANN, Lars, 38118 Braunschweig (DE); BREPOHL, Esther, 38116 Braunschweig (DE); EICHERT, Carsten, 21391 Reppenstedt-Dachtmissen (DE); MÜLLER, Clemens, 38104 Braunschweig (DE); SALIKOV, Vitalij, 21220 Seevetal (DE); SCHOLL, Stephan, 38116 Braunschweig (DE)
(74) Vertreter: Michalski Hüttermann & Partner Patentanwälte mbB
(86) Internationale Anmeldenummer: PCT/EP2021/063917
(87) Internationale Veröffentlichungsnummer: WO 2022/033735

(56) Entgegenhaltungen:
- EP-B1- 1 082 286
- DE-B- 1 095 266
- GB-A- 826 236
- KR-A- 20090 024 799
- US-A- 5 473 102

## Beschreibung

Die vorliegende Erfindung betrifft ein Verfahren zur Herstellung eines Gemisches aus recycelter Terephthalsäure (r-TA) und recycelter Isophthalsäure (r-IA), deren Mischungsverhältnis erfindungsgemäß gezielt einstellbar ist sowie eine Verwendung eines entsprechenden Gemisches.

Polyethylenterephthalat -Kunststoffe (PET) werden in großem Umfang eingesetzt, u. anderem als Getränkeflaschen, Lebensmittelverpackung wie Salatschalen, Wurst- und Käseverpackungen, Fasern, Textilien, Automobilbauteile, klare, opake oder gefärbte Waschmittelflaschen und Produktionsabfälle. Allgemein werden für diese Zwecke Polykondensate eingesetzt, insbesondere Polyethylennaphthalat, Polyethylenterephthalat-Polyethylenisophthalat-Copolymer, Polypropylenterephthalat, Polybutylenterephthalat, Polyethylenterephthalat-Copolymer mit 1,4-Cyclohexandicarboxylat-Struktureinheiten.

Sie werden unmittelbar aus Basischemikalien fossilen Ursprungs als sogenannte Virgin-PET hergestellt und/oder aus recycelten Kunststoffen gewonnen, die ganz oder teilweise aus einem mechanischen werkstofflichen Recyclingverfahren stammen und als r-PET bezeichnet werden. Diese Recyclingverfahren sind oftmals aufwendig, sofern es sich um mehrschichtige Verbundmaterialien auf Polymerbasis als zu recycelnde Kunststoffe handelt. Diese weisen neben PET oftmals auch eine dünne Lage aus Polyethylen (PE) oder Polyamid (PA) oder EthylenVinylalkohol-Copolymer (EVOH) als Sperrschicht auf, oder eine solche aus Ethylen-Vinylacetat Copolymer (EVA) als wasserabweisende Schicht. Als weitere Schichten können einzeln oder in Kombination vorhanden sein:, Pappe, Polyvinylalkohol (PVOH), Polypropylen (PP), Polystyrol (PS) oder deren Copolymere sowie Metalle. Selbst bei fast sortenreinen Kunststoffabfällen ist das Recycling nicht einfach. Aus dem Stand der Technik sind eine ganze Reihe von Verfahren bekannt, um aus PET-Abfällen Terephthalsäure zu gewinnen, die erneut als Rohstoff eingesetzt werden kann und die als r-TA bezeichnet wird. Diese Verfahren arbeiten entweder mit hohen Drücken und/oder mit hohen Temperaturen und oftmals auch in Batch-Verfahren und somit eher unwirtschaftlich. Es ist bekannt, PET-haltige Abfälle in einem kontinuierlichen Prozess mittels einer basischen Depolymerisation unter Einsatz von NaOH und Zugabe eines Alkohols aufzuschließen.

Bei der Produktion von PET und weiteren Polykondensaten gemäß dem Stand der Technik wird der Polymerisationsmischung neben gereinigter Terephthalsäure (purified terephthalic acid, PTA) gereinigte Isophthalsäure (purified isophthalic acid, PIA) zugesetzt, um die Eigenschaften des zukünftigen Polymers zu beeinflussen. Das Stoffmengenverhältnis beträgt in der Regel 99:1 (mol PTA zu mol PIA). PTA und PIA werden daneben für die Herstellung von gesättigten und ungesättigten Polyesterharzen sowie Alkydharzen eingesetzt. Diese werden u.a. als Vollmaterial oder als Teil eines Verbundwerkstoffs für die Herstellung von Strukturbauteilen sowie für die Herstellung von Beschichtungen, Dichtmassen, Klebstoffen, Farben und Lacke verwendet.

Die KR 2009 0024799A und die US 5473102A offenbaren das Recycling von PET Flaschen, bei denen mittels basischer Hydrolyse ein Gemisch aus TA und IA gewonnen wird, welches gegebenenfalls durch Destillation redaktionelle Kristallisation aufbereitet wird, und TA und IA getrennt wird.

Es ist Aufgabe der Erfindung, ein Verfahren zur Herstellung von verbessertem r-TA und eine Verwendung dessen anzugeben.

Die Verfahrensaufgabe wird gelöst bei einem Verfahren aufweisend die Schritte:
- Analysieren von PET-Abfällen hinsichtlich ihres IA-Gehaltes,
- Einteilen der PET-Abfälle in zwei oder mehr Fraktionen mit unterschiedlichem IA-Gehalt,
- Mischen der Fraktionen zur Erreichung eines gewünschten IA-Gehaltes in der Mischung,
- Aufarbeiten der Mischung zur Gewinnung eines Gemisches von r-TA und r-IA mit eingestelltem r-IA-Isomerengehaltes zwischen 0,001 Gew.-% und 25 Gew.-% am Gemisch.

Mit großem Vorteil eröffnet die Erfindung eine Möglichkeit, Kunststoffmaterial aus unterschiedlichen Quellen zu recyclen und dabei ein für eine spätere Anwendung sehr vorteilhaftes Verhältnis von r-TA/r-IA einzustellen. Hierbei werden die zu recycelnden Kunststoffe in einem kontinuierlichen Reaktor verarbeitet und als Produkte die entsprechenden Dicarbonsäuren und Diole gewonnen, im Fall von PET also eine Benzoldicarbonsäure in der Form der Isomere r-TA und r-IA und Monoethylenglykol (MEG). Mit großem Vorteil liegt das erfindungsgemäß erzeugte Verhältnis so, dass sich ein reduzierter Verfahrensaufwand für die Herstellung von r-PET unter Nutzung von r-TA ergibt, da diese bereits einen Anteil an r-IA enthält, wodurch eine spätere Zumischung und damit ein Arbeitsschritt entfallen kann.

Im erfindungsgemäßen Verfahrensschritt des Analysierens werden aus dem Recyclingmaterial entnommene Proben aufbereitet und insbesondere mittels HPLC analysiert. Anschließend erfolgt eine Einteilung des Recyclingmaterials in insbesondere zwei Fraktionen, eine erste Fraktion mit einem IA-Anteil von < 0,1 Gew.-% und eine zweite Fraktion mit einem IA-Anteil von > 0,1 Gew.-%, bevorzugt > 1 Gew.-%, besonders bevorzugt > 1,5 Gew.-%. Vorzugsweise erfolgt eine Einteilung in drei Fraktionen, wobei die dritte Fraktion einen IA-Anteil von > 3 Gew.-% aufweist. Sollte das Recyclingmaterial sortenrein sein, so weist es üblicherweise einen einzigen, in etwa gleichbleibenden IA-Gehalt auf. Unterschiedliche sortenreine Recyclingmaterialien wie Flaschen, Tiefziehverpackungen, Polyestertextilien, Produktionsabfälle und so weiter weisen daher auch unterschiedliche IA-Gehalte auf, insbesondere ür das jeweilige Recyclingmaterial typische unterschiedliche IA-Gehalte. Sie können daher als erfindungsgemäße Fraktion eingesetzt werden. Ebenso erfindungsgemäß ist es, aus Recyclingmaterialien unterschiedlichen IA-Gehaltes eine Fraktion mit für den späteren Schritt der Mischung benötigtem IA-Gehalt zu erstellen. Diese erfasst ebenso die Reduktion eines IA-Gehaltes eines ersten Recyclingmaterials durch Beimischung eines IA-armen, zweiten Recyclingmaterials im gewünschten Verhältnis wie die Erhöhung des IA-Gehaltes des ersten durch Beimischung eines gehaltvolleren zweiten Materials, ebenfalls im gewünschten Verhältnis. Auf diese Weise ist mit Vorteil ein auf die spätere Anwendung abgestimmter IA-Gehalt erhältlich.

Optional ist erfindungsgemäß ein Schritt der Kompaktierung einer oder mehrerer Fraktionen vorgesehen, bevor der Schritt des Mischens erfolgt. Dies kann insbesondere bei fasrigen Ausgangsmaterialien erforderlich oder wünschenswert sein, um die spätere Verarbeitbarkeit zu verbessern.

Im Schritt des Mischens der Fraktionen werden diese entsprechend der Mischvorgabe aus dem Verfahrensschritt "Analytik" miteinander gemischt, insbesondere über gravimetrische Dosierung mittels Feststoffdosierer in einem geeigneten Mischgerät wie zum Beispiel einem Trommelmischer. Alternativ und besonders vorteilhaft erfolgt das Mischen der Abfälle direkt bei der Dosierung der Abfälle in einen Extruder mit Hilfe einer entsprechenden Anzahl von gravimetrischen Dosieraggregaten. Die Mischung wird dabei erfindungsgemäß so eingestellt, dass das aus dem Analyseschritt ermittelte Isomerenverhältnis (mol TA zu mol IA) zwischen 100:0 und 75:25 liegt, bevorzugt zwischen 99:1 und 90:10 und ganz besonders bevorzugt zwischen 99:1 und 97:3.

Nach dem Mischen erfolgt das Aufarbeiten der PET-Abfallmischung zur Gewinnung einer Mischung von r-TA und r-IA mit eingestelltem r-IA-Isomerengehalt zwischen 0,001 Gew.-% und 25 Gew.-% am resultierenden Gemisch aus r-TA und r-IA. Das Aufarbeiten umfasst dabei insbesondere die Schritte der basischen Depolymerisation, bei der ein Diol entsteht, welches gewonnen werden kann, und die Schritte der Trennung und Aufreinigung von r-TA und r-IA.

Das gewonnene r-TA/r-IA-Gemisch weist typischerweise das gleiche oder ein sehr stark ähnliches Isomerenverhältnis wie das Ausgangspolymer bzw. wie das Fraktionengemisch vor dem Schritt der Aufarbeitung auf, das oftmals bei 99:1 (mol r-TA : mol r-IA) liegt. Dadurch kann das erhaltene Isomerengemisch erfindungsgemäß ohne oder mit nur einer kleinen Zugabe von Isophthalsäure oder Terephthalsäure einem Schritt der Polykondesation zu PET zugeführt werden. Dies ist ein Kostenvorteil, da IA einen höheren Marktpreis als TA erzielt. Durch das Verwenden des erfindungsgemäßen Gemisches entfällt mit großem Vorteil das aufwändige Trennen der Isomere während des Recyclings und das neue Einstellen des Isomerengemisches vor der r-PET-Polymerisation.

In einer alternativen Ausführungsform des Verfahrens wird das nach dem Aufarbeitungsschritt erhaltene r-TA/r-IA-Gemisch durch literaturbekannte Verfahren, wie z.b. Umkristallisation oder Schmelzkristallisation in seine Isomere getrennt, um so das preislich interessantere r-IA zu gewinnen.

Die Offenbarung betrifft auch eine Mischung aus r-TA und r-IA mit einem eingestelltem r-IA-Isomerengehalt zwischen 1,5 Gew.-% und 3 Gew.-% am Gemisch aus r-TA und r-IA, insbesondere erhältlich durch ein Verfahren wie beschrieben.

Die Verwendungsaufgabe wird gelöst durch die Verwendung der Mischung wie beschrieben in einer Polymerisationsreaktion zu r-PET.

Nachfolgend wird das Verfahren auch in Form eines Ausführungsbeispiels sowie ausführlich anhand von Figuren beschrieben.

### Allgemeiner Verfahrensablauf

Für die Bestimmung ihres Isophthalsäuregehalts (IA) wird die Abfallprobe durch einen Vorbehandlungsschritt wie eine Depolymerisation oder Umesterung für die Analyse vorbereitet und die Analyse dann mit Chromatographie (GC, HPLC) oder NMR-Spektroskopie durchgeführt.

Die so gewonnenen Gehaltsangaben der einzelnen Abfallfraktionen werden zu einer Mischvorgabe verarbeitet. Diese dient dem gezielten Einstellen des gewünschten Gehaltes der Isophthalsäure im Rohprodukt am Ende des Aufarbeitungsschrittes.

Die entweder bereits vorhandenen oder erfindungsgemäß zusammengestellten Abfallfraktionen werden in einem nächsten Verfahrensschritt optional zerkleinert und/oder kompaktiert. Dies ist bei Fasern und faserähnlichen Abfallfraktionen und Folienmaterialien gringer Stärke vorteilhaft, um eine problemlose Zuführung in die Verfahrensstufe "Depolymerisation" zu gewährleisten.

Nach der optionalen Kompaktierung werden die Abfallfraktionen in dem Verfahrensschritt "Mischen" entsprechend der Mischvorgabe aus dem Verfahrensschritt "Analytik" miteinander gemischt. Das Mischen erfolgt über die gravimetrische Dosierung mittels Feststoffdosierer in einem geeigneten Mischgerät, z.B. einem Trommelmischer. Bevorzugt ist jedoch das Mischen der Abfälle direkt bei der Dosierung in den Extruder mit Hilfe von je einem gravimetrischen Dosieraggregat pro Abfallfraktion. Das Isomerenverhältnis (mol TA : mol IA) wird dabei erfindungsgemäß zwischen 100:0 und 75:25, bevorzugt zwischen 99:1 und 90:10 und besonders bevorzugt zwischen 99:1 und 97:3 eingestellt.

Der Schritt der Aufarbeitung der Polykondensat-Kunststoffabfälle, wie Polyethylennaphthalat-, Polyethylenterephthalat-, Polyethylenterephthalat-Polyethylenisophthalat-Copolymer-, Polybutylenterephthalat- und Polyethylenterephthalat-Copolymer mit 1,4-Cyclohexandicarboxylat-Struktureinheiten-Abfälle erfolgt zunächst im Unterschritt "Depolymerisation" in einem kontinuierlich arbeitenden Doppelschneckenextruder, in den die Fraktionen anteilig gemäß der Mischvorgabe gravimetrisch eindosiert werden. Im Extruder erfolgt kontinuierlich die Verseifungs- bzw. Depolymerisationsreaktion des Polykondensats unter Zugabe von festem Natriumhydroxid. Erfindungsgemäß wird gegebenenfalls an geeigneten Stellen Wasser zudosiert. In diesem Ausführungsbeispiel wurden 6,66 kg/h PET-haltige Abfälle, 2,91 kg/h Natriumhydroxid und bis zu 10 kg/h Wasser verarbeitet. Das Verhältnis aus Natriumhydroxid zu PET-Abfällen wird während des Prozesses so eingestellt, dass ein konstantes stöchiometrisches Verhältnis von etwa 2,1 bezogen auf die konstitutionelle Repetiereinheit von Polyalkylenterephthalat bzw. den oben genannten Polyethylenisophthalat-Copolymer, Polybutylenterephthalat und Polyethylenterephthalatcopolymer mit 1,4-Cyclohexandicarboxylat-Struktureinheiten eingehalten wird.

Bei der Reaktion des Polykondensats mit Natriumhydroxid wird pro Repetiereinheit des Polymers ein mol Dialkohol, im Fall von PET Monoethylenglykol (MEG) und in Spuren Diethylenglykol (DEG), freigesetzt. Dieses MEG bzw. DEG werden während des Extrusionsprozesses oder daran anschließend durch Destillation zurückgewonnen und nach Aufreinigung durch Destillation, Rektifikation oder Adsorption dem Aufarbeitungskreislauf oder dem Kunststoffkreislauf zugeführt.

Bei diesem Unterschritt entsteht ein weiteres Reaktionsprodukt, das Salz einer Dicarbonsäure, im Falle von PET und Natriumhydroxid als Einsatzmaterial entsprechend Dinatriumterephthalat. Dieses ist in Wasser löslich (bei 20 °C ca. 140 g/L Lösung), so dass die Wasserzugabe in den Extruder den Löseprozess schon im Extruder startet, wodurch der nächste Unterschritt der Aufarbeitung verkürzt wird, der deutlich länger dauern würde. Die Zugabe von Wasser in den Extruder reduziert die Viskosität und verbessert so die Förderfähigkeit des Stoffstroms, wodurch ein kontinuierliches Verfahren erleichtert wird. Eine weitere Wasserzugabe nach der Extrusion erfolgt gegebenenfalls erfindungsgemäß beispielsweise in einem Rührbehälter oder durch einen In-Line-Dispergierer, der gleichzeitig durch seine Pumpwirkung das gelöste Rohprodukt in der Anlage weitertransportiert.

Der Reaktionsaustrag des Extruders besteht aus einer wässrigen Suspension aus Dinatriumterephthalat und -isophthalat, MEG, nicht reagierten Anteilen des Natriumhydroxids und des PET-Abfalls, wie z.B. PET-Resten. Je nach Zusammensetzung des Eingangsmaterials können auch geringfügige Mengen von Abbauprodukten von PA und Farbstoffen sowie andere Polymere, wie z.B. PE, PP und PS, enthalten sein.

Polyolefine, wie z.B. PE oder PP, sowie Polyamide, wie z.B. PA 6.6, gehen bei den bevorzugten Betriebsbedingungen (T = 130 °C - 160 °C) chemisch unverändert aus dem Verfahren hervor und können im nachfolgenden Unterschritt "Filtration" der Aufarbeitung einfach und effektiv abgetrennt werden. Während des einmaligen Förderns des polyalkylenhaltigen Ausgangsstoffs durch den Extruder wird das Polyalkylen zu 92 % bis 97 % depolymerisiert. Die anschließend durch weitere Wasserzugabe erhaltene Rohproduktlösung aus Dinatriumterephthalat - im Fall von PET als Eingangsmaterial - wird durch eine Aufreinigungskaskade aus mehreren Filtrationsstufen und anschließender Adsorption und/oder Extraktion von Verunreinigungen und Fremdstoffen gereinigt.

Aus der gereinigten Rohproduktlösung wird durch das Versetzen mit einer Säure unter geeigneten Bedingungen das Gemisch aus r-TA und r-IA ausgefällt und anschließend mittels kontinuierlicher Filtration gewonnen. Aus der Mutterlauge können durch geeignete Verfahren, wie z.B. Eindampfen und Kristallisation, das Prozesswasser und das korrespondierende Salz zurückgewonnen werden. Im Bedarfsfall können die Reinheit und Morphologie des r-TA/r-IA-Gemischs in einer nachgeschalteten Umkristallisation in geeigneter Weise weiter angepasst werden. Für PET als Ausgangsmaterial besteht das erhaltene eingestellte Isomerengemisch aus 75 Gew.-% bis 100% Gew.-% r-TA und 25 Gew.-% bis 0 Gew.-% r-IA.

An diesen letzten Schritt kann sich erfindungsgemäß ein Polymerisationsschritt anschließen, in dem MEG oder r-MEG und das erhaltene Gemisch in bekannter Weise zu einem r-PET polymerisiert werden.

### Ausführungsbeispiel 1

Ein Produktionsabfall aus der Produktion von Multilayer-Food-trays, bestehend aus PET mit einer PE-Schicht bildet die Fraktion 1. Ein Polyestertextil bildet die Fraktion 2 und post-consumer-PET-Flaschen bilden die Fraktion 3. Die drei Fraktionen werden für das Recyclingverfahren durch Waschen, Trocknen und Zerkleinern auf die industrietypgische Größe < 14 mm vorbereitet, ggf. auch auf eine Größe < 3 mm, falls erforderlich.

Anschließend erfolgt eine Probenahme je Abfallfraktion. Je 30 g der entnommenen Probe wird in einem Laborkneter (Haake PolyLab Rheomix 600) 5 min bei 140 °C mit 13,1 g Natriumhydroxid gemischt. Anschließend wird die erhaltene Paste in 500 mL Wasser gelöst und die Reststoffe abfiltriert. Das Filtrat wird 1:25 mit Wasser verdünnt und mit einer HPLC vermessen. Folgende Betriebsparameter wurden bei der HPLC-Messung eingestellt:

**Tabelle 1 Betriebsparameter der HPLC**

| Parameter | |
|---|---|
| Säule | Phenomenex Gemini 3u C18 110A, reversed Phase |
| Gerät | Thermo Fisher Ultimate 3000 |
| Säulenlänge | 100 mm |
| Durchmesser der Säule | 3 mm |
| Messzeit | 25 min |
| Eluent | 0,06 % Phosphorsäure : Acetonitril = 82:18 |
| Fluss | 0,4 mL/min |
| Säulentemperatur | 35°C |
| Injektionsvolumen | 0,1 µL |
| Detektor | UV/Vis |
| Detektionswellenlänge | 240 nm |
| Retentionszeit Terephthalsäure | 3,603 min |
| Retentionszeit Isophthalsäure | 4,363 min |

| | |
|---|---|
| Diese Bestimmung der IA-Gehalte ergab für die erste Fraktion einen IA-Gehalt von 1,65%, für die zweite einen Gehalt von 0,09% und für die dritte einen Gehalt von 3,17% | |

Anschließend wurden die zerkleinerten PET-haltigen Abfälle mit einem Gesamtstrom von 10 kg/h kontinuierlich unter Intergasatmosphäre in einen gleichläufigen Doppelschneckenextruder mittels je einer Dosiereinrichtung pro Fraktion zudosiert, sodass in dem Gesamtstrom ein Isomerenverhältnis von mol TA zu mol IA von 98,5 : 1,5 besteht. Es wurden 4,37 kg/h NaOH mit einer weiteren Dosiereinrichtung in den Doppelschneckenextruder dosiert. Die Zugabeströme ermöglichen die Aufrechterhaltung eines konstanten stöchiometrischen Verhältnisses von etwa 2,1 mol PET pro mol NaOH bezogen auf die konstitutionelle Repetiereinheit von PET. Das Gehäuse des Extruders wurde bereichsweise auf Temperaturen von 80 °C bis 180 °C temperiert. In das Verfahrensteil des Extruders wurde weiterhin 10 kg/h Wasser mit einer Dosiereinrichtung gegeben, um das Dinatriumterephthalat/Dinatriumisophthalat-Gemisch im Reaktionsprodukt anzulösen. Ein Doppelschneckenextruders mit dichtkämmenden Schneckenelementen stellt eine gute Durchmischung des Reaktionsgemisches sicher, insbesondere, wenn Natriumhydroxid in Perlform verwendet wird. Gleichzeitig werden die Feststoffe einer hohen mechanischen Beanspruchung unterworfen. Die Temperatur der Depolymerisation wird unterhalb des Zersetzungspunktes des jeweiligen Kunststoffs und insbesondere unterhalb des Siedepunktes von MEG gewählt. Während des einmaligen Förderns durch den Extruder wird der Kunststoff zu 92 % - 97 % depolymerisiert.

Der Extruderaustrag bestand aus einer Suspension aus gesättigter Lösung des Dinatriumterephthalat/Dinatriumisophthalat-Gemischs, ungelöstem Dinatriumterephthalat/Dinatriumisophthalat-Gemisch, nicht reagierten PET-Resten, Resten von MEG, DEG, Farbstoffen sowie PE-Resten. Bei Entnahme einer Probe des Extruderaustrags konnte ein Verseifungsgrad von 92 % - 97 % bezogen auf den PET-Anteil des PET-haltigen Abfalls festgestellt werden.

Die erhaltene Suspension wurde in einem nachfolgenden Schritt mit einer ausreichenden Menge an Wasser versetzt, um das Dinatriumterephthalat//Dinatriumisophthalat-Gemisch vollständig zu lösen und anschließend einer mehrstufigen Aufreinigungskaskade zu unterziehen, in der durch Filtration sowie adsorptive und/oder extraktive Aufreinigungsverfahren nach dem Stand der Technik Verunreinigungen abgetrennt wurden. An dieser Stelle des Recyclingverfahrens werden die PE-Reste aus dem PET/PE-Multilayermaterial sowie die Farbstoffe aus dem Textilmaterial abgetrennt.

Die gereinigte Lösung wird anschließend mit einer Säure versetzt, um das Gemisch aus r-TA und r-IA auszufällen. Als Säure eignet sich erfindungsgemäß insbesondere Schwefelsäure mit einer Konzentration von 25 % (w/w).

Dieses Gemisch wurde durch Filtration, Resuspension, Umkristallisation, erneute Fitration, sowie mehrere Wachschritte und anschließende Trocknung zum Endprodukt verarbeitet. Hierbei werden noch vorhandene Verunreinigungen wie z.B. Farbstoffe oder Bisphenol A abgetrennt. Das erfindungsgemäße Verfahren toleriert mit Vorteil auch Verunreinigungen wie beispielsweise Additive, Füllstoffe, Färbemittel, Pigmente, Umhüllungen, Etiketten, Metalle und Metallbeschichtungen, Pappe und dergleichen. Die Verunreinigungen werden durch Filtration und/oder andere Verfahrensstufen abgetrennt.

Der Schritt der Polymerisation des erhaltenen r-TA/r-IA-Gemisches mit dem aus dem erfindungsgemäßen Verfahren gewonnenen MEG, oder MEG aus anderen Quellen, erfolgt durch Vermischen der beiden Monomere in einem gerührten, beheizbaren Reaktor. Dem r-TA/r-IA-Gemisch mit einem Gewichtsanteil von 68,8 Gew.-% an der Polymerisationsmischung wurde r-MEG mit einem Masseanteil von 30,8 Gew.-% und r-DEG mit einem Gewichtsanteil von 0,33 Gew.-% sowie der Katalysator Antimonglycolat mit ca. 0,025 Gew.-% und Tetramethylammoniumhydroxid mit 0,028 Gew.-% zugesetzt. Die Polymerisation erfolgte bei einer Temperatur von 230°C - 280°C, insbesondere bei 240°C, unter starkem Rühren unter Inertgasatmosphäre. Die Polykondensation wurde durch Anlegen eines Vakuums und das Abdestillieren von freiwerdendem Reaktionswasser auf die Produktseite des Gleichgewichts gedrängt. Nach Abschluß der Reaktion lag r-PET aus dem erfindungemäß gewonnenn r-TA/r-IA-Gemisch vor.

Die nachfolgend beschriebenen Figuren zeigen:
- Fig. 1:: ein Schema des erfindungsgemäßen Verfahrens und
- Fig. 2:: ein Schema der Aufarbeitungsschritte des erfindungsgemäßen Verfahrens.

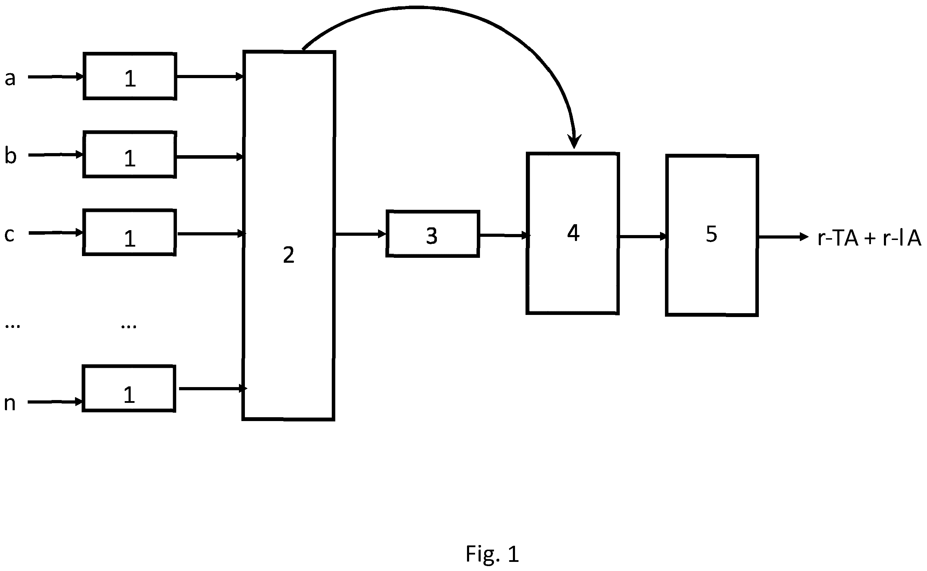

**Fig. 1** zeigt ein Blockschema des erfindungsgemäßen Verfahrens. Die geeigneten Abfälle a-n werden in einem ersten Schritt 1 gewaschen und zerkleinert, optional vorgetrocknet, bevor sie in einem zweiten Schritt 2 auf ihren IA-Gehalt hin analysiert werden. Anhand des Ergebnisses dieser Analyse werden die Abfälle in Fraktionen eingeteilt, bzw. als solche klassifiziert und es wird eine Mischvorgabe erstellt. Optional erfolgt ein Schritt 3 des Kompaktierens, hier dargestellt nur für die Abfallfraktion c, bevor ein obligatorischer Schritt 4 des Mischens der Fraktionen erfolgt, um hierdurch einen PET-Abfall zu erzeigen, der einen gewünschten Gehalt an IA aufweist. Dies ist mit dem gebogenen Pfeil dargestellt, der die Überführung der gewünschten Fraktionen in ihrem jeweiligen Anteil gemäß Mischvorgabe in die Mischvorrichtung - insbesondere einen Schneckenextruder - symbolisiert. Die gemischten Fraktionen werden dann in einem Schritt 5 so aufbereitet, dass am Ende ein Gemisch von r-TA und r-IA mit eingestelltem r-IA-Isomerengehalt zwischen 0,001 Gew.-% und 25 Gew.-% am Gemisch erhalten wird.

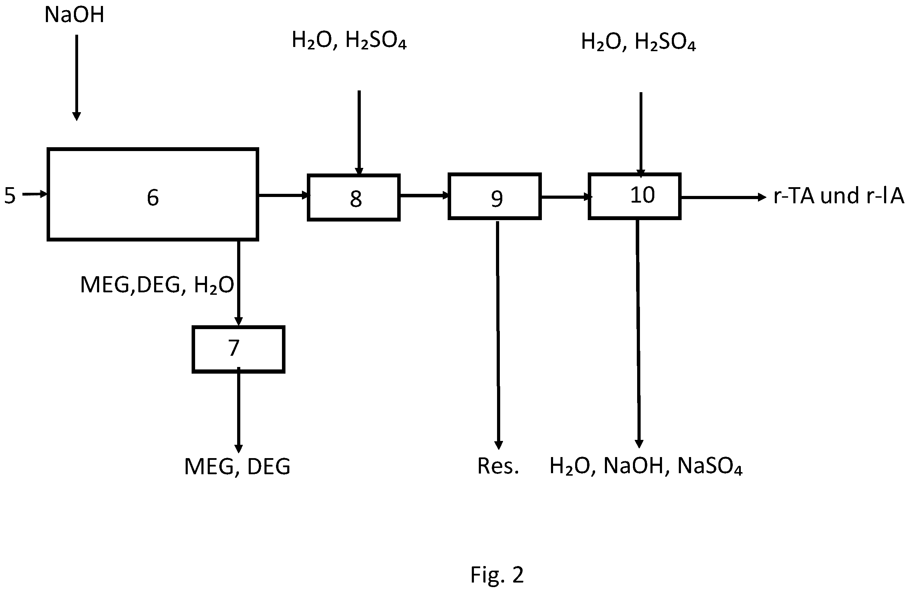

**Fig. 2** zeigt den Aufbereitungsschritt 5 detaillierter. Dieser beginnt mit einer basischen Depolymerisation 6 unter Zufuhr von NaOH und ggf. Wasser. Am Ausgang dieses Schrittes wird ein Strom von MEG, DEG und Wasser erhalten, der einer MEG-Aufreinigung 7 unterzogen wird, an deren Ende MEG und DEG erhalten werden. Der pastöse Stoffstrom aus der Depolymerisation 6 wird einem Löseschritt 8 unter Zufuhr von Wasser und Schwefelsäure unterzogen und Reststoffe RES in einem Filterschritt 9 abgetrennt. In einem Kristallisationsschritt 10 unter Zufuhr von Wasser und Schwefelsäure inklusive anschließender Filtration werden das gewünschte Produkt und u.a. NaSO₄ erhalten.

Mit großem Vorteil erlaubt dieses Verfahren die Gewinnung eines Gemisches aus r-TA und r-IA mit vorher festgelegtem Anteil von r-IA zur weiteren Verwendung als hochwertiger Ausgangsstoff für die erneute Herstellung von PET-Produkten. Bei Einsatz dieses hochwertigen Ausgangsstoffes wird ein Schritt der Zugabe von IA bei der Herstellung der r-PET-Produkte überflüssig gemacht, wodurch r-PET-Produkte bei gleichguten Eigenschaften günstiger werden. Dies ist durch die erfindungsgemäße Analyse der Ausgangsmaterialien und deren Mischung vor Aufarbeitung ermöglicht. Es sind diese zusätzlichen Schritte der Analyse und Mischung, die die Herstellung eines hochwertigen Produktes ermöglichen.

## Patentansprüche

1. Verfahren zur Herstellung eines Gemisches aus recycelter Terephthalsäure (r-TA) und recycelter iso-Terephthalsäure (r-IA) aus Polykondensatabfällen (PK-Abfälle) aufweisend die Schritte:
- Analysieren von PK-Abfällen hinsichtlich ihres IA-Gehaltes,
- Einteilen der PK-Abfälle in zwei oder mehr Fraktionen mit unterschiedlichem IA-Gehalt,
- Mischen der Fraktionen zur Erreichung eines gewünschten IA-Gehaltes in der Mischung,
- Aufarbeiten der Mischung zur Gewinnung eines Gemisches von r-TA und r-IA mit eingestelltem r-IA-Isomerengehaltes zwischen 0,001 Gew.-% und 25 Gew.-% am Gemisch.

2. Verfahren gemäß Anspruch 1, bei die PK-Abfälle gewählt sind aus den Polyethylennaphthalaten, Polyethylenterephthalaten, glycolmodifizierten Polyethylenterephthalaten, Polypropylenterephthalaten, Polyethylenterephthalat-Polyethylenisophthalat-Copolymeren, Polybutylenterephthalaten, Polyethylenterephthalat-Copolymeren mit 1,4-Cyclohexandicarboxylat-Struktureinheiten, einzeln oder in Mischung.

3. Verfahren gemäß Anspruch 1 oder 2, bei dem die Einteilung der PK-Abfälle in eine erste Fraktion mit einem IA-Anteil von < 0,1 Gew.-%, eine zweite Fraktion mit einem IA-Anteil von > 0,1 Gew.-%, bevorzugt > 1 Gew.-%, ganz besonders bevorzugt > 1,5 Gew.-%, und vorzugsweise eine dritte Fraktion mit einem IA-Anteil von > 3 Gew.-% erfolgt.

4. Verfahren gemäß einem der Ansprüche 1 bis 3, bei dem ein Schritt der Kompaktierung und/oder Zerkleiners jeweils einer oder mehrerer Fraktionen vor dem Schritt des Mischens erfolgt.

5. Verfahren gemäß einem der Ansprüche 1 bis 4, bei dem der Schritt des Mischens über gravimetrische Dosierung erfolgt, insbesondere mittels gravimetrischer Dosieraggregate in einen Extruder, wobei vorzugsweise die Mischung so eingestellt wird, dass das Isomerenverhältnis (mol TA zu mol IA) zwischen 100:0 und 75:25 liegt, bevorzugt zwischen 99:1 und 90:10 und ganz besonders bevorzugt zwischen 99:1 und 97:3.

6. Verfahren gemäß einem der vorherigen Ansprüche, bei dem der Schritt des Aufarbeitens eine basischen Depolymerisation, bei der ein Diol gewonnen wird und eine Trennung und Aufreinigung von r-TA und r-IA umfasst.

7. Verfahren gemäß einem der vorherigen Ansprüche, bei dem r-TA und r-IA nicht als freie Säuren sondern als Salze als Produkt gewonnen werden.

8. Verfahren gemäß einem der vorherigen Ansprüche, bei dem die gewonnenen Produkte in einem Polymerisationsschritt zur r-PET-Produkten oder zu r-PBT-Produkten oder zu r-Polypropylenterephthalat-Produkten polymerisiert werden.

9. Verwendung einer Mischung aus r-TA und r-IA mit einem r-IA-Gehalt zwischen 0,001 Gew.-% und 25 Gew.-% am Gemisch, erhältlich durch ein Verfahren gemäß der Ansprüche 1 bis 7,. in einer Polymerisationsreaktion zu r-PET, r-PBT, r-Polypropylenterephthalat, weiteren Polykondensaten, zur Herstellung von Alkydharzen oder gesättigten und ungesättigten Polyesterharzen.

10. Verwendung nach Anspruch 9, wobei die Mischung einen r-IA-Gehalt zwischen 0,01 Gew.-% und 10 Gew.-% an der Mischung aufweist, insbesondere einen r-IA-Gehalt zwischen 1,5 Gew.-% und 3 Gew.-% aufweist.

## Claims

1. A method for producing a mixture of recycled terephthalic acid (r-TA) and recycled iso-terephthalic acid (r-IA) from condensation polymer waste (CP waste) comprising the steps:
- analyzing CP waste with regard to its IA content,
- dividing the CP waste into two or more fractions with a different IA content,
- mixing the fractions to obtain a desired IA content in the mixture,
- processing the mixture to obtain a mixture of r-TA and r-IA with an adjusted r-IA isomer content of between 0.001 wt.% and 25 wt.% in the mixture.

2. The method according to claim 1, in which the CP waste is selected from polyethylene naphthalates, polyethylene terephthalates, glycol-modified polyethylene terephthalates, polypropylene terephthalates, polyethylene terephthalate-polyethylene isophthalate copolymers, polybutylene terephthalates, polyethylene terephthalate copolymers, individually or in a mixture, with 1,4- cyclohexanedicarboxylate structural units.

3. The method according to claim 1 or 2, in which the CP waste is divided into a first fraction with an IA content of < 0.1 wt.%, a second fraction with an IA content of > 0.1 wt.-%, preferably > 1 wt.%, optimally > 1.5 wt.%, and preferably a third fraction with an IA content of >3 wt.%.

4. The method according to any one of claims 1 to 3, in which a step of compacting and/or comminuting one or more fractions respectively takes place before the mixing step.

5. The method according to any one of claims 1 to 4, in which the mixing step is carried out by gravimetric dosing, in particular by means of gravimetric dosing units into an extruder, wherein preferably the mixture is adjusted so that the isomer ratio (mol TA to mol IA) is between 100:0 and 75:25, preferably between 99:1 and 90:10 and optimally between 99:1 and 97:3.

6. The method according to any one of the preceding claims, in which the processing step comprises a basic depolymerization, in which a diol is obtained, and a separation and purification of r-TA and r-IA.

7. The method according to any one of the preceding claims, in which r-TA and r-IA are not obtained as free acids but as salts as the product.

8. The method according to any one of the preceding claims, in which the products obtained are polymerized in a polymerization step to form r-PET products or r-PBT products or r-polypropylene terephthalate products.

9. Use of a mixture of r-TA and r-IA having an r-IA content of between 0.001 wt.% and 25 wt.% in the mixture, obtainable by a method according to claims 1 to 7, in a polymerization reaction to form r-PET, r-PBT, r-polypropylene terephthalate, further polycondensation polymers, to produce alkyd resins or saturated and unsaturated polyester resins.

10. Use according to claim 9, wherein the mixture has an r-IA content of between 0.01 wt.% and 10 wt.% in the mixture, in particular an r-IA content of between 1.5 wt.% and 3 wt.%.

## Revendications

1. Procédé de fabrication d'un mélange d'acide téréphtalique (r-TA) recyclé et d'acide iso-téréphtalique (r-IA) recyclé à partir de déchets de polycondensation (déchets de PC), présentant les étapes :
- analyse des déchets de PC en ce qui concerne leur teneur en IA,
- séparation des déchets de PC en deux ou plusieurs fractions avec des teneurs en !A différentes,
- mélange des fractions pour atteindre une teneur en !A souhaitée dans le mélange,
- traitement du mélange pour l'obtention d'un mélange de r-TA et de r-IA avec une teneur en isomère r-IA définie entre 0,001 % en poids et 25 % en poids dans le mélange.

2. Procédé selon la revendication 1, chez lequel les déchets de PC sont choisis parmi des poly éthylène naphtalates, des poly éthylène téréphtalates, des poly éthylène téréphtalates modifiés avec du glycol, des poly propylène téréphtalates, des copolymères poly éthylène téréphtalate - poly éthylène isophtalate, des poly butylène téréphtalates, des copolymères poly éthylène téréphtalate avec des unités structurelles 1,4-cyclohexane di carboxylate, individuels ou en mélange.

3. Procédé selon la revendication 1 ou la revendication 2, chez lequel, la séparation des déchets de PC a lieu en une première fraction avec une teneur en IA < 0,1% en poids, une deuxième fraction avec une teneur en IA > 0,1 % en poids, de préférence > 1 % en poids, de manière particulièrement préférée > 1,5 % en poids, et de préférence en une troisième fraction avec une teneur en IA > 3 % en poids.

4. Procédé selon l'une des revendications 1 à 3, chez lequel il y a une étape de compactage et/ou de diminution de respectivement une ou plusieurs fractions avant l'étape de mélange.

5. Procédé selon l'une des revendications 1 à 4, chez lequel l'étape de mélange a lieu par le biais d'un dosage gravimétrique, notamment au moyen d'agrégats de dosage gravimétriques dans une extrudeuse, où de préférence le mélange est défini de telle manière que le rapport des isomères (moles de TA sur moles d'lA) se situe entre 100 : 0 et 75 : 25, de préférence entre 99 : 1 et 90 : 10 et de manière particulièrement préférée entre 99 : 1 et 97 : 3.

6. Procédé selon l'une des revendications précédentes, chez lequel l'étape de traitement comprend une dépolymérisation basique, dans laquelle on obtient un diol, et une séparation et une purification de r-TA et de r-IA.

7. Procédé selon l'une des revendications précédentes, chez lequel r-TA et r-IA ne sont pas obtenus sous forme d'acides libres mais sous forme de sels, servant de produits.

8. Procédé selon l'une des revendications précédentes, chez lequel les produits obtenus sont polymérisés dans une étape de polymérisation en produits r-PET, ou en produits r-PBT, ou en produits r-poly propylène téréphtalates.

9. Utilisation d'un mélange de r-TA et de r-IA avec une teneur en IA entre 0,001 % en poids et 25 % en poids dans le mélange pouvant être obtenu par un procédé selon les revendications 1 à 7, dans une réaction de polymérisation pour donner du r-PET, du r-PBT, du r-poly propylène téréphtalate, d'autres produits de polycondensation permettant la fabrication de résines alkydes ou de résines polyester saturées ou insaturées.

10. Utilisation selon la revendication 9, dans laquelle le mélange présente une teneur en r-IA entre 0,01 % en poids et 10 % en poids dans le mélange, notamment présente une teneur en IA entre 1,5 % en poids et 3 % en poids.
